Europäisches Patentamt

(19) European Patent Office

Office européen des brevets

(11) Publication number: **0 239 175**
**B1**

(12) **EUROPEAN PATENT SPECIFICATION**

(45) Date of publication of the patent specification:
04.07.90

(51) Int. Cl.⁵: **E01C 19/20,** E01H 10/00,
B65G 65/42

(21) Application number: 87200539.2

(22) Date of filing: 24.03.87

(54) Device for storing and discharging bulk goods.

(30) Priority: 26.03.86 NL 8600778

(43) Date of publication of application:
30.09.87 Bulletin 87/40

(45) Publication of the grant of the patent:
04.07.90 Bulletin 90/27

(84) Designated Contracting States:
BE CH DE FR GB LI NL SE

(56) References cited:
EP-A- 0 149 274
CH-A- 441 122
FR-A- 1 507 813
NL-A- 6 607 566

(73) Proprietor: Nido Universal Machines B.V.,
Industriestraat 7, NL-7451 BA Holten(NL)

(72) Inventor: Van Vooren, Cornelis Bastiaan, Borg
Ekenstein 25, NL-7608 GW Almelo(NL)

(74) Representative: Konings, Lucien Marie Cornelis Joseph
et al, OCTROOIBUREAU ARNOLD & SIEDSMA
Sweelinckplein 1, NL-2517 GK Den Haag(NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a device for storing and discharging bulk goods, such as sand or spreading salt, comprising a bunker for the bulk goods with a base which at least partially consists of a feeding mechanism, for example the active upper part of an endless conveyor belt, for transporting the bulk goods out of the bunker, the feeding mechanism extending outside the bunker via a discharge opening present in a first upright wall part of the bunker.

Such a device (c.f. EP-A 0 149 274) can form part of or be placed on a mobile device, for example a heavy goods vehicle for salt spreading to make or keep motorways passable. In such a case, where the bulk goods consist particularly of sand or spreading salt, there is located behind the discharge opening, the passage through which can be variable, a spreading device in the form of a rotating spreader plate which can be driven by a motor and which throws out the spreading material falling onto it.

It has been found in practice that when spreading material is discharged by means of a conveyor belt the bulk material is first removed from the front part of the bunker and that the bulk material lying further to the rear is not carried away by the feeding device. As a consequence of this the centre of gravity of the partially filled bunker is displaced towards the rear. This means a movement of the centre of gravity in the direction of the discharge opening. Particularly, although not only, with devices of the type described, which form part of or are placed on a mobile device such as a heavy goods vehicle, this can create the great problem that as a result the pressure on the driven front wheels is decreased, which can seriously impair the steerability of the heavy goods vehicle or even result in it becoming virtually impossible to control. It will be apparent that apart from being technically less than desirable this can moreover be dangerous, and the invention therefore has for its object to provide means whereby the centre of gravity remains at least substantially in its nominal position, without complicated means for this being necessary.

It is the aim of the invention to afford a solution to the stated problem by providing a device of the type referred to in the preamble which displays the feature that in a zone spaced apart from the said first upright wall part and a second upright wall part arranged opposite it, a first partition plate is arranged above the feeding mechanism which plate can pivot on a shaft extending traversely to the direction of movement of said feeding mechanism and which plate extends in its vertical position down to said feeding mechanism without coming into contact with it, and which plate is connected with a second partition plate which in the vertical position of said first partition plate extends from the pivot shaft in the direction of said first upright wall.

As explanation of the concept in accordance with the invention it is noted that the first partition plate is subjected to a rearward force, that is a force directed in the direction of the discharge opening, by the spreading material that is carried by the conveyor or belt from the foremost part of the bunker in the direction of the discharge opening. However, as a result of the force of weight which acts downward onto the second partition plate through the mass of the spreading material the first partition plate is not capable of pivoting in the direction of the discharge opening while still leaving free a certain width of passage. As a result the spreading material will in the first instance be discharged via the discharge opening from the part between the first partition plate and this discharge opening, whereby the pressure on the second partition plate decreases and the first partition plate, together with the second partition plate, can tilt a little while leaving free a certain space through which spreading material can make its way from the front zone under the second partition plate in the direction of the discharge opening. This passage of material continues until a new equilibrium is attained between the horizontal force acting on the first partition plate and the vertical force acting on the second partition plate. It will be apprent that a self-adjusting system is hereby obtained whereby the displacing of the centre of gravity is limited to small variations around the nominal position.

The invention will now be elucidated with reference to the drawing of a random embodiment, to which the invention is not limited. In the drawing:

Fig. 1 shows a heavy goods vehicle with a salt spreader according to the invention;
Fig. 2 is the view II/II from fig. 1; and
Fig. 3 is the cross section III/III from fig. 2.

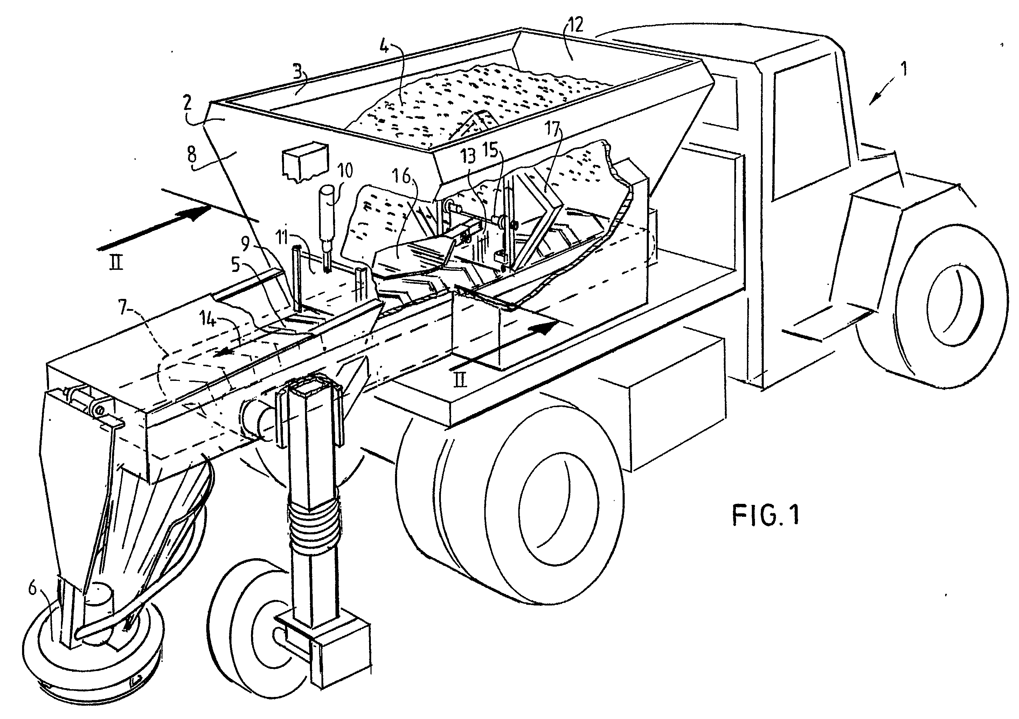

Fig. 1 shows a heavy goods vehicle 1 which carries a spreader device 2 according to the invention. This spreader device 2 comprises a more or less funnel-shaped bunker 3, of which the base, which carries the spreading salt, takes the form of the upper, active part 5 of the conveyor belt 7 which guides the spreading salt from bunker 3 to a spreader plate 6. The active part 5 of conveyor belt 7 extends outside the bunker 3 via a discharge opening 9 present in the upright rear wall 8 of bunker 3, which opening can be opened more or less as required by means of a remote controlled hydraulic cylinder 10 and a slide hatch 11 for allowing passage of the required quantity of spreading salt per unit of time, this being partly dependent on the drive speed of the conveyor belt 7.

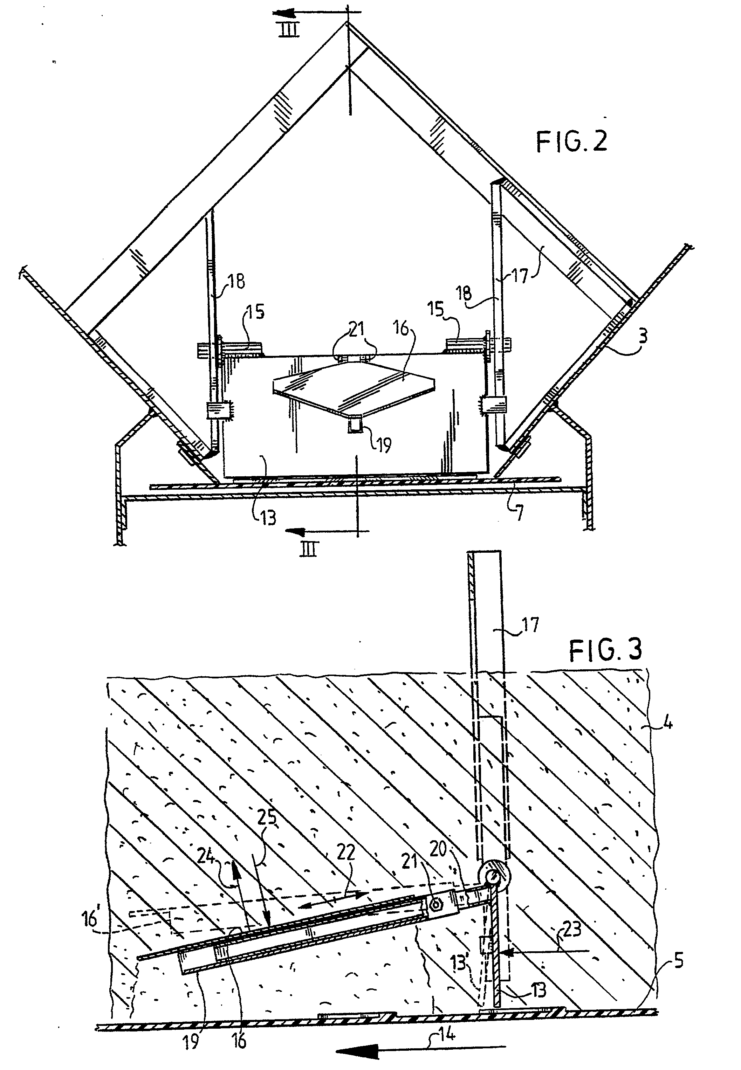

Arranged above the active part 5 of the conveyor belt 7 in a zone at a distance from the rear wall 8 and the front wall 12 of bunker 3 is a first partition plate 13 which can pivot on a shaft 15 extending transversely of the movement of direction 14 of the active part 5 of the conveyor belt and which extends in its vertical position, as shown clearly in fig. 3, down to the active part 5 of conveyor belt 7 without coming into contact with it. The first partition plate 13 is connected to a second partition plate 16 which extends, as shown in fig. 3 when the first partition plate 13 is in the vertical position, from the pivot shaft in the direction of the rear wall.

Fig. 2 shows the manner of attaching the first and second partition for pivoting in the space bounded by the bunker 3. Arranged in this space is a frame 17 with two vertical beams 18 with which the pivot shaft 15 consisting of two parts co-operates for pivoting. The first partition plate 13 is coupled by welding to the divided pivot shaft 15. Also coupled to the first partition plate 13 by welding is the second partition plate 16, as shown in fig. 3. The second partition plate 16 is in fact carried by a box girder 19 which can slide on a second box girder 20 attached by welding to the first partition plate 13 and which can be fixed in a required position by a screw element. The slide potential is indicated with the arrow 22. The best possible adjustment can be obtained as a result of this configuration. It is noted by way of explanation that the self-regulating action of the configuration comprising the first partition plate 13 and second partition plate 16 works on the basis of an equilibrium of forces between the force applied by the spreading salt 4 to the first partition plate 13 under the influence of the driving of the active part 5 of conveyor belt 7. This force is indicated symbolically with an arrow 23. This force 23 manifests itself in an upward force which is applied by the second partition plate 16 to the salt lying above it. This force is indicated schematically with an arrow 24. Depending on the weight force applied to the second partition plate 16 by the salt lying above it, this force being shown with the arrow 25, the partition plates 13 and 16 may start moving. When the force 25 is sufficiently small a displacement can occur to the position designated by 13', 16' and further, whereby the spreading salt can pass from the front side of the first partition plate 13 under the said partition.

Salt was removed initially from the rear part of the bunker. A discharge of salt now also occurs out of the foremost zone through the gradually widening width of passage in the zone of the first partition plate 13, resulting in a balancing such that a small shift in the centre of gravity is counterbalanced. The centre of gravity can in this way be held at a required position with small fluctuations in order to ensure a good control of the heavy goods vehicle 1.

## Claims

1. Device for storing and discharging bulk goods, such as sand or spreading salt, comprising a bunker (3) for the bulk goods having a base which at least partially consists of a feeding mechanism, for example the active upper part (5) of an endless conveyor belt (7), for transporting said bulk goods out of the bunker, said feeding mechanism extending outside said bunker via a discharge opening (9) present in a first upright wall part (8) of said bunker, characterized in that in a zone spaced apart from the said first upright wall part (8) and a second upright wall part (12) arranged opposite it, a first partition plate (13) is arranged above the feeding mechanism which plate can pivot on a shaft (15) extending traversely to the direction of movement (14) of said feeding mechanism and which plate extends in its vertical position down to said feeding mechanism without coming into contact with it, and which plate is connected with a second partition plate (16) which in the vertical position of said first partition plate extends from the pivot shaft (15) in the direction of said first upright wall (8).

2. Device as claimed in claim 1, characterized in that the active length of the second partition plate (16) being adjustable.

## Patentansprüche

1. Vorrichtung zum Speichern und Austragen von Schüttgütern, wie Sand oder Streusalz, mit einem Bunker (3) für das Schüttgut, dessen Boden mindestens teilweise aus einem Fördermechanismus, z.B. dem oberen Förderturm (5) eines Förderbandes (7), zum Austragen des Schüttgutes aus dem Bunker besteht, wobei sich der Fördermechanismus aus dem Bunker heraus durch eine Austragsöffnung (9) erstreckt, die in einem ersten senkrechten Wandteil (8) des Bunkers vorgesehen ist, dadurch gekennzeichnet, daß in einem Bereich im Abstand von dem ersten senkrechten Wandteil (8) und von einem diesem gegenüber angeordneten zweiten senkrechten Wandteil (12) eine erste Trennplatte (13) oberhalb des Fördermechanismus angeordnet ist, die um eine quer zur Bewegungsrichtung (14) des Fördermechanismus verlaufende Achse (15) schwenkbar ist und sich in ihrer Vertikalstellung nach unten bis zu dem Fördermechanismus erstreckt, ohne mit diesem in Berührung zu kommen, und daß die Platte mit einer zweiten Trennplatte (16) verbunden ist, die bei Vertikalstellung der ersten Trennplatte sich von der Schwenkachse (15) in Richtung auf die erste senkrechte Wand (8) erstreckt.

2. Vorrichtung nach Anspruch 1, dadurch gekennzeichnet, daß die wirksame Länge der zweiten Trennplatte (16) einstellbar ist.

## Revendications

1. Dispositif pour emmagasiner et décharger des matériaux en vrac, tels que du sable ou du sel à répandre, comportant un réservoir (3) pour les matériaux en vrac pourvu d'une base consistant, au moins en partie, en un mécanisme d'alimentation, par exemple la partie supérieure active (5) d'un tapis roulant sans fin (7), pour déverser lesdits matériaux en vrac hors du réservoir, ledit mécanisme d'alimentation s'étendant hors dudit réservoir via une ouverture de décharge (9) ménagée dans une première partie de paroi dressée (8) dudit réservoir, caractérisé en ce que, dans une zone écartée de ladite première partie de paroi dressée (8) et une deuxième partie de paroi dressée (12) montée à l'opposé de la première, une première plaque de séparation (13) est montée audessus du mécanisme d'alimentation, cette plaque pouvant pivoter sur un arbre pour le pivotement (15) s'étendant transversalement à la direction du déplacement (14) dudit mécanisme d'alimentation et s'étendant, dans sa position verticale, jusqu'audit mécanisme d'alimentation sans entrer en contact avec lui, cette plaque étant reliée à une deuxième plaque de séparation (16) qui s'étend à partir de l'arbre pour le pivotement (15) en direction de ladite première paroi dressée (8).

2. Dispositif selon la revendication 1, caractérisé en ce que la longueur active de la deuxième plaque de séparation (16) est réglable.

FIG. 1

FIG.2

18  15  21  16  15  18  17

3

19

13  7

III

III

17

FIG.3

4

25  24  22  21  20

16'

23

5

13  13

19  16  14